# EUROPÄISCHE PATENTSCHRIFT

(11) **EP 1 036 622 B1**
(45) Veröffentlichungstag und Bekanntmachung des Hinweises auf die Patenterteilung: **27.08.2003**
(21) Anmeldenummer: 00103755.5
(22) Anmeldetag: 23.02.2000
(51) Int. Cl.: B23D 31/00

(54) **Vorrichtung zum Bruchtrennen eines Bauteiles in zwischen Bauteilbegrenzungen und einer Durchbrechung vorgesehenen Querschnitten, insbesondere einer geteilten Lageranordnung**
Apparatus for seperating by breaking
Dispositif pour couper par rupture

(30) Priorität: 16.03.1999 DE 19911597
(43) Veröffentlichungstag der Anmeldung: 20.09.2000
(73) Patentinhaber: Bayerische Motoren Werke Aktiengesellschaft, 80809 München (DE)
(72) Erfinder: Luchner, Clemens, 85598 Baldham (DE); Kröhn, Günter, 4400 Steyr (AT)

(56) Entgegenhaltungen:
- DE-A- 19 733 387
- GB-A- 724 358

## Beschreibung

Die Erfindung bezieht sich nach dem Oberbegriff des Patentanspruches 1 auf eine Vorrichtung zum Bruchtrennen eines Bauteiles in zwischen Bauteilbegrenzungen und einer Durchbrechung vorgesehenen Querschnitten, insbesondere einer geteilten Lageranordnung, wobei vor dem Bruchtrennen in Teilbereichen der Bruchtrenn-Querschnitte die Bruchfestigkeit des Bauteiles gezielt durch eine geometrische und/oder technologische Kerbstelle verringert ist, wobei mittels drei derart am Innenumfang der Durchbrechung verteilt zur Anlage bringbaren Elementen die Bruchkraft sowohl in Bruchtrennrichtung als auch in dazu quer gerichtete Kraftkomponenten umgeformt ist, wobei mit letzteren in Nachbarbereichen der Bruchtrenn-Querschnitte am Innenumfang der Durchbrechung wirkende Stützkräfte erzeugt sind.

Eine derartige Vorrichtung ist in der EP 0 713 741 A vorgeschlagen, wobei zur Vermeidung nachteilig bleibender Verformungen aus dem Bruchtrennen vorgeschlagen wird, daß in der Vorrichtung beim Bruchtrennen zur Bruchtrennkraft orthogonal wirkende Stützkräfte auf den Innenumfang der Durchbrechung des Bauteiles zur Vermeidung bleibender Verformungen erzeugt sind. Hierbei sind die orthogonalen Stützkräfte über Kreissegmente der Vorrichtung auf den Innenumfang der Durchbrechung eingeleitet, wobei die Kreissegmente über den Bereich der Bruchtrennebene hinweggeführt angeordnet sein können.

Weiter ist aus der DE 44 13 255 A1 eine Vorrichtung zum Bruchtrennen eines Bauteiles bekannt, die zwei in die Durchbrechung eines Bauteiles einsetzbare, auseinandertreibbare Halbdorne umfaßt, die gegenüber dem Durchmesser der Durchbrechung um ein vorbestimmtes Maß kleiner gewählt sind. Diese Maßnahme ist größenmäßig so gewählt, daß das Bauteil beim Bruchtrennen bezüglich seiner Verformung im elastischen Bereich verbleibt, wobei diese gezielte elastische Verformung der Unterstützung der Brucheinleitung in der jeweiligen Kerbstelle dient.

Wie aus Versuchen erkennbar, können die zu trennenden Bauteilabschnitte aufgrund unterschiedlicher geometrischer Gestaltung ein unterschiedliches elastisches Verhalten zeigen mit dem Nachteil, daß die tatsächlichen Bruchtrennflächen gegenüber der Richtung der gewünschten Bruchtrennflächen winkelmäßig abweichen.

Der Erfindung liegt die Aufgabe zugrunde, eine gattungsgemäße Vorrichtung zum Bruchtrennen eines Bauteiles mit unterschiedlichen Festigkeiten bzw. elastischem Verhalten in den zu trennenden Bauteilhälften zur Erzielung einer einwandfreien Bruchtrennung ohne die vorgenannten Nachteile weiterzubilden.

Diese Aufgabe ist mit dem Patentanspruch 1 dadurch gelöst, daß in der Durchbrechung mit einem relativ steifen Bauteilabschnitt als erstes Element ein Halbdorn mit einem gegenüber dem Radius (R_{D}) der Durchbrechung konstant kleineren oder veränderlichen Krümmungsradius (R_{HD}) angeordnet ist und daß in der Durchbrechung mit einem demgegenüber relativ weichen Bauteilabschnitt als zweite Elemente über Umfangsabschnitte sich erstreckende Anlageflächen an einem weiteren einteiligen Halbdom oder an geführten Stempeln vorgesehen sind, wobei die Anlageflächen über etwa mittig wirksame Kraftkomponenten (F₁, F₂) in Abhängigkeit der Festigkeit des weichen Bauteiles jeweils durch einen Winkel α von 80° bis 140° beabstandet angeordnet sind.

Mit der Erfindung ist in vorteilhafter Weise z.B. ein biegeweicher Lagerdeckel von einem steifen Lagerstuhl eines Maschinengehäuses einwandfrei bruchzutrennen, wobei zur Schraubenachse geneigte Bruchtrennflächen vermieden sind und damit eine Schädigung der Bruchtrennflächen durch Schubspannungen aus Verschraubungskräften unterbleibt. Weiter ist durch das Fehlen der vorgenannten Schubkräfte die runde Form der Durchbrechung im verschraubten Zustand vorteilhaft gewährleistet, wobei auch durch wiederholtes Verschrauben auftretende Setzerscheinungen unterbleiben.

Bei einem relativ weichen Lagerdeckel werden somit erfindungsgemäß die aus der Bruchtrennkraft abgeleiteten Stützkräfte bzw. Kraftkomponenten jeweils nahe den zukünftigen Bruchtrennflächen in den Innenumfang der Durchbrechung eingeleitet, während bei einem relativ steifen Deckel mit demnach geringerer elastischer Verformung die Stützkräfte im Nahbereich der wirkenden Bruchtrennkraft eingeleitet werden.

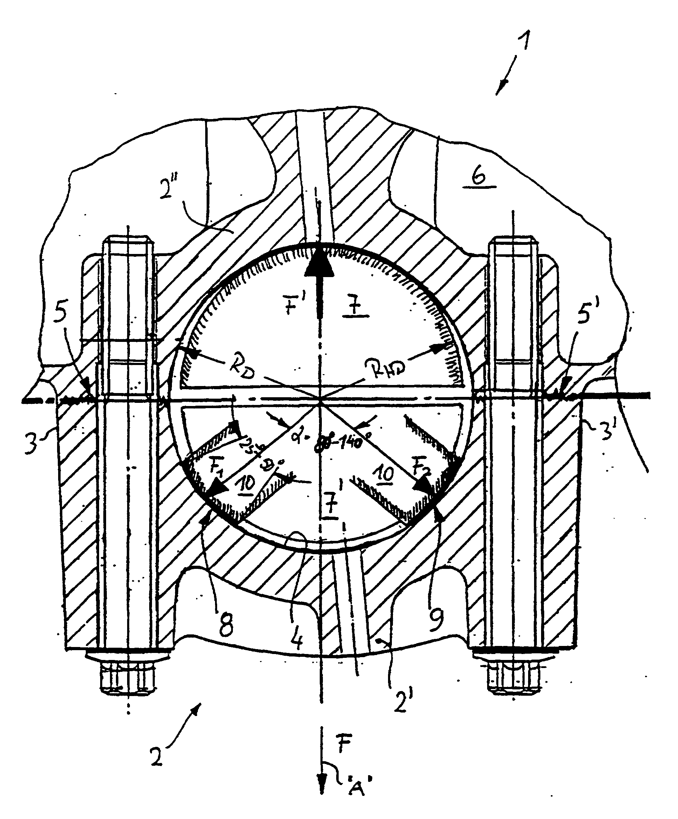

Die Erfindung ist anhand einer in der Zeichnung schematisch dargestellten Vorrichtung beschrieben.

Eine Vorrichtung 1 dient zum Bruchtrennen einer Lageranordnung 2 mit zwischen Bauteilbegrenzungen 3, 3' und einer Durchbrechung 4 vorgesehenen Querschnitten 5 und 5', wobei die Lageranordnung 2 einen Lagerdeckel 2' umfaßt, der mit einem mit einem lediglich abschnittsweise aufgezeigten Maschinengehäuse 6 fest verbundenen Lagerstuhl 2" verschraubbar ist

In der vorzugsweise zur Lagerung einer nicht dargestellten Kurbelwelle dienenden Lageranordnung 2 ist vor dem Bruchtrennen in Teilbereichen der Bruchtrenn-Querschnitte 5, 5' die Bruchfestigkeit des Bauteiles bzw. der Lageranordnung 2 gezielt durch eine geometrische und/oder technologische, nicht dargestellte Kerbstelle verringert.

Die schematisch dargestellte Bruchtrenn-Vorrichtung 1 ist in ihrem Aufbau derart gestaltet, daß mittels drei derart am Innenumfang der Durchbrechung 4 verteilt zur Anlage bringbaren Elementen 7, 8, 9 die Bruchkraft "F" sowohl in Bruchtrennrichtung gemäß Pfeil "A" als auch in dazu quer gerichtete Kraftkomponenten "F₁, F₂" umgeformt ist, wobei mit den letztgenannten Kraftkomponenten in Nachbarbereichen der Bruchtrenn-Querschnitte 5 und 5' am Innenumfang der Durchbrechung 4 wirkende Stützkräfte erzeugt sind.

Wie sich aus Versuchen zum Bruchtrennen der Lageranordnung 2 ergeben hat, ist das Ausmaß der elastischen Verformung der Durchbrechung 4 in dem mit dem Maschinengehäuse 6 fest verbundenen Lagerstuhl 2" relativ gering, demgegenüber kann aufgrund der geometrischen Abmessungen die elastische Verformung des Lagerdeckels 2' in der Durchbrechung 4 ungleich größer sein.

Zur aufgabengemäßen Erzielung einer einwandfreien Bruchtrennung des Lagerdeckels 2' vom Lagerstuhl 2" mit zur Verschraubung orthogonal verlaufenden Bruchtrenn-Querschnitten 5 und 5' wird daher erfindungsgemäß vorgeschlagen, daß in der Durchbrechung 4 mit einem relativ steifen Bauteilabschnitt 2" als erstes Element ein Halbdorn 7 mit einem gegenüber dem Radius "R_{D}" der Durchbrechung konstant kleineren oder veränderlichen Krümmungsradius "R_{HD}" angeordnet ist und daß in der Durchbrechung 4 mit einem demgegenüber relativ weichen Bauteilabschnitt 2' als zweite Elemente über Umfangsabschnitte sich erstreckende Anlageflächen 8 und 9 an einem weiteren einteiligen Halbdom 7' oder an geführten, nur angedeuteten Stempeln 10 vorgesehen sind, wobei die Anlageflächen 8 und 9 über etwa mittig wirksame Kraftkomponenten "F₁, F₂" in Abhängigkeit der Festigkeit des weichen Bauteiles 2' jeweils durch einen Winkel α von 80° bis 140° beabstandet angeordnet sind.

Bei einem relativ weichen Bauteilabschnitt bzw. Lagerdeckel 2' mit starker elastischer Verformung sind somit die Anlageflächen 8 und 9 über einen Winkel von ca. 140° gegenseitig beabstandet und somit in Nahbereichen der Bruchtrenn-Querschnitte 5 und 5' angeordnet, womit die elastische Verformung auf das für die Brucheinleitung über die nicht gezeigten Kerbstellen erforderliche Maß beschränkt ist. Bei größerer Steifigkeit des Lagerdeckels 2' und damit geringerer elastischer Verformung kann der Spreizungswinkel α zwischen den mittig auf den Anlagefiächen 8 und 9 einwirkenden Kraftkomponenten "F₁, F₂" auf ca. 80° bis 120° reduziert werden.

Die Anlageflächen 8 und 9 können, wie in der einzigen Figur angedeutet, an Vorsprüngen des Halbdomes 7' ausgebildet sein oder aber an in der einzigen Figur im Halbdorn 7' geführt angedeuteten Stempeln 10 ausgebildet sein und sich jeweils in der Durchbrechung 4 über einen Umfangswinkel von ca. 25° bis 50° erstrecken. Der Halbdorn 7' mit den integrierten, in den Kantenbereichen verrundeten Anlageflächen 8 und 9 kann im Bereich der Bruchtrennrichtung gegenüber den Anlageflächen 8, 9 radial um 0,05 - 0,5 mm zurückgenommen sein zur ggf. elastischen Anlage des Lagerdeckels 2'. Im Rahmen der Erfindung kann die Bruchtrennung auch über gesondert betätigbare Stempel 10 erzielt sein.

Mit der erfindungsgemäßen Bruchtrenn-Vorrichtung 1 kann diese auf das elastische Verhalten der hälftigen Bruchtrennteile optimal zur Erzielung einer einwandfreien Bruchtrennung eingestellt werden.

## Patentansprüche

1. Vorrichtung zum Bruchtrennen eines Bauteiles in zwischen Bauteilbegrenzungen und einer Durchbrechung vorgesehenen Querschnitten, insbesondere einer geteilten Lageranordnung,
- wobei vor dem Bruchtrennen in Teilbereichen der Bruchtrenn-Querschnitte (5, 5') die Bruchfestigkeit des Bauteiles (2) gezielt durch eine geometrische und/oder technologische Kerbstelle verringert ist, und
- wobei mittels drei derart am Innenumfang der Durchbrechung (4) verteilt zur Anlage bringbaren Elementen (7, 8, 9) die Bruchkraft (F) sowohl in Bruchtrennrichtung (Pfeil "A") als auch in dazu quer gerichtete Kraftkomponenten (F₁, F₂) umgeformt ist, wobei
- mit letzteren in Nachbarbereichen der Bruchtrenn-Querschnitte (5, 5') am Innenumfang der Durchbrechung (4) wirkende Stützkräfte erzeugt sind,
**dadurch gekennzeichnet,**
- **daß** in der Durchbrechung (4) mit einem relativ steifen Bauteilabschnitt (2") als erstes Element ein Halbdom (7) mit einem gegenüber dem Radius (R_{D}) der Durchbrechung (4) konstant kleineren oder veränderlichen Krümmungsradius (R_{HD}) angeordnet ist, und
- **daß** in der Durchbrechung (4) mit einem demgegenüber relativ weichen Bauteilabschnitt (2') als zweite Elemente über Umfangsabschnitte sich erstreckende Anlageflächen (8, 9) an einem weiteren einteiligen Halbdom (7') oder an geführten Stempeln (10) vorgesehen sind, wobei
- die Anlageflächen (8, 9) über etwa mittig wirksame Kraftkomponenten (F₁, F₂) in Abhängigkeit der Festigkeit des weichen Bauteiles (2') jeweils durch einen Winkel α von 80° bis 140° beabstandet angeordnet sind.

2. Vorrichtung nach Anspruch 1, **dadurch gekennzeichnet, daß** die Anlageflächen (8, 9) sich jeweils in der Durchbrechung (4) über einen Umfangswinkel von ca. 25° bis 50° erstrecken.

## Claims

1. A device for fracturing a component, especially a divided bearing arrangement, at cross-sections between an aperture and boundaries of the component,
- wherein the breaking strength of the component (2) is deliberately reduced by a geometrical and/or technological notch over parts of the fracture cross-section (5, 5'), and
- wherein the breaking force (F) is converted by components (7, 8, 9) for bringing into abutment, into components (F₁, F₂) extending in the direction of fracture (arrow "A") and in the direction perpendicular thereto, wherein
- the said components of force generate bracing forces acting on the inner periphery of the aperture (4) in neighbouring regions of the fracture cross-sections (5, 5')
**characterised in that**
- a first element in the form of a half-mandrel (7) having a radius of curvature (R_{HD}) which is variable or constant and smaller than the radius (R_{D}) of the aperture (4) is disposed with a relatively stiff part (2") of the component in the aperture (4) and
- second elements in the form of abutment surfaces (8, 9) extending over peripheral portions on a second one-part half mandrel (7') or on guided punches (10) are provided with a relatively flexible part (2') of the component in the aperture (4), wherein
- the abutment surfaces (8, 9) are separated by an angle α of 80° to 140° via approximately centrally acting components (F₁, F₂) of force in dependence on the strength of the flexible part (2').

2. A device according to claim 1, **characterised in that** the abutment surfaces (8, 9) each extend in the aperture (4) over a peripheral angle of about 25° to 50°.

## Revendications

1. Dispositif pour séparer une pièce par rupture dans des sections prévues entre des limites de la pièce et une ouverture, en particulier un palier en deux parties, dans lequel
- avant la coupure par rupture, la résistance à la rupture de la pièce est volontairement réduite dans des régions partielles des sections de coupe par rupture (5, 5'), par une zone d'encochage géométrique et/ou technologique, et
- au moyen de trois éléments (7, 8, 9) qui peuvent être placés en appui de façon répartie le long de la périphérie intérieure de l'ouverture (4), la force de rupture (F) est transformée en composantes de force dirigées aussi bien dans la direction de coupure par rupture (flèche « A ») que transversalement à cette direction (F₁, F₂), et
- avec ces dernières, des forces de soutien qui agissent au niveau de la périphérie intérieure de l'ouverture (4) sont produites dans des régions proches des sections de coupe par rupture (5, 5'),
**caractérisé en ce que**
- dans l'ouverture (4) qui comprend un segment de pièce relativement rigide (2"), est disposé, en tant que premier élément, un demi-mandrin (7) possédant un rayon de courbure (R_{HD}) constamment inférieur au rayon (Ro) de l'ouverture (4), ou encore variable et
- dans l'ouverture (4) qui présente un segment de pièce (2') relativement peu résistant en comparaison, sont prévues, en tant que deuxièmes éléments, des surfaces d'appui (8, 9) s'étendant sur des segments de la circonférence, qui sont formés sur un autre demi-mandrin en une seule pièce (7') ou sur des pistons guidés (10),
- les surfaces d'appui (8, 9) étant disposées espacées d'un angle α de 80° à 140° en fonction de la résistance de la partie de pièce peu résistante (2'), sur des composantes de force (F₁, F₂) à action à peu près centrée.

2. Dispositif selon la revendication 1,
**caractérisé en ce que**
les surfaces d'appui (8, 9) s'étendent chacune sur un angle circonférentiel d'environ 25° à 50° dans l'ouverture (4).
